# EUROPEAN PATENT SPECIFICATION

(11) **EP 3 637 011 B1**
(45) Date of publication and mention of the grant of the patent: **16.08.2023**
(21) Application number: 19199750.1
(22) Date of filing: 26.09.2019
(51) Int. Cl.: F24H 1/14, H05B 3/00, B01D 35/18, C02F 1/00, C02F 1/02, H05B 6/02, H05B 6/80

(54) **WATER PURIFIER**
WASSERREINIGER
PURIFICATEUR D'EAU

(30) Priority: 11.10.2018 KR 20180121341
(43) Date of publication of application: 15.04.2020
(73) Proprietor: LG ELECTRONICS INC., Yeongdeungpo-Gu Seoul 07336 (KR)
(72) Inventor: LEE, Heejun, 08592 Seoul (KR); PARK, Seungje, 08592 Seoul (KR); JANG, Hoyong, 08592 Seoul (KR); HEO, Jeashik, 08592 Seoul (KR)
(74) Representative: Ter Meer Steinmeister & Partner

(56) References cited:
- WO-A1-2004/034742
- WO-A1-2013/141438
- CN-A- 105 972 813
- KR-A- 20180 103 597
- US-A- 5 325 822
- US-A1- 2006 088 302

## Description

### BACKGROUND OF THE INVENTION

### 1. Field of the Invention

Embodiments relate to a water purifier equipped with a power semiconductor element to control the power supplied to the heater that heats the hot water tank.

### 2. Background of the Invention

A water purifier can be divided into a water storage tank-type and a direct water-type depending on whether the water tank is installed. The water storage tank-type water purifier is configured to supply purified water stored in a storage tank when a user manipulates a discharge unit, while storing the purified water in the water tank. In contrast, the direct water-type water purifier does not have a water storage tank, and supplies purified water to the user by filtering immediately raw water, when the user manipulates the discharge unit. As direct water-type purifiers are sanitary and can save water compared to water storage tank-type water purifiers, recently, users' preference for direct water-type purifiers has increased.

The water purifier also provides hot and cold water in addition to the ordinary temperature water. The water purifier providing hot and cold water is equipped with a separate heating and cooling system inside it. The heating system is configured to generate hot water by heating the purified water, and the cooling system is configured to generate cold water by cooling the purified water.

Meanwhile, the induction heaters have the advantage of the high energy efficiency and being able to rapidly and stably control the heating targets, so development has been actively carried out to apply the induction heaters to the direct water-type water purifier as an instant heating device. A power semiconductor element (IGBT, Triac, etc.) is used to control the power supply to induction heaters, but has a switching loss and a conduction loss, causing heat generation. As the power semiconductor element is destroyed when the generated heat exceeds the operating temperature, heating of the power semiconductor element is important. Typically, heat discharge plate has been used to lower the temperature of the power semiconductor element.

However, when hot water is discharged continuously, temperature of the power semiconductor element increases continuously and temperature of heat discharge plate increases as well. Therefore, when the temperature reaches the operating temperature range limit, there may be a problem in that hot water is not discharged.

As such, the heat discharge structure of the power semiconductor element is important to enhance the continuous discharge capacity of hot water in the direct water-type water purifier.

KR 2018 0103597 A provides a water purifier, comprising: a direct water type hot water tank having an inlet and an outlet and forming a flow path for generating hot water; an inlet pipe connected to the inlet and supplying purified water to the direct water type hot water tank; an outlet pipe connected to the outlet to discharge hot water heated in the direct water type hot water tank; an induction heating device having a power device and heating the direct type hot water tank using an induction current; and a water-cooled cooling tank installed in the inlet pipe for cooling the power device by the purified water supplied from the inlet pipe.

US 2006/088302 A1 presents a fluid heating system that includes a fluid supply conduit, a hot fluid conduit, and a fluid heating tube assembly. The fluid heating tube assembly includes an inlet coupling coupled to the fluid supply conduit, an outlet coupling coupled to the hot fluid conduit, and at least one fluid heating tube coupled between the inlet coupling and the outlet coupling. The at least one fluid heating tube includes a tube formed of heat conducting material, a dielectric coating permanently bonded on an outer surface of the tube, and a resistive layer permanently bonded on the dielectric coating. A power distributor is coupled to the fluid heating tube assembly and coupleable to a power source. A switch is coupled between the power distributor and the fluid heating tube assembly to control current flow from the power distributor to the at least one fluid heating tube.

US 5 325 822 A presents a tankless, flow-through electric water heater whose housing is designed for modular application, where serially connected modules define the path of the fluid being heated, in this case water, through the heater from inlet to final outlet. Each module contains two separate chambers and each chamber is provided with an electric immersion type heating element.

CN 105 972 813 A presents an electric boiler which comprises a water inlet pipe and a water outlet pipe which are connected by heating water pipes, wherein a heating element is arranged on each heating water pipe, and a relay is arranged on the water inlet pipe. The relay is arranged on the water inlet pipe, the temperature of the water inlet pipe is basically consistent with the temperature of cold water, and the relay implements heat exchange with the water inlet pipe with cold water flowing therein all the time so as to timely take away heat caused during working of the relay, and therefore, the relay can keep working in proper temperature.

WO 2004/034742 A1 presents a through-flow fluid heater tube comprising a conduit adapted to convey the fluid to be heated, an electric heating element controlled by a Triac, a related heat-sink arrangement, control circuits adapted to drive said Triac, a connection joining said electric heating element to the power-supply mains via said Triac, in which said heat-sink arrangement is applied on to the outside of said through-flow heater tube. The current regulation device is energized directly from the power-supply mains and said control and driving circuits supply a low-voltage regulating current to said current regulation device.

### SUMMARY OF THE INVENTION

Therefore, an object of the present invention is to provide a new heat discharge structure that is capable of increasing the continuous discharge capacity of hot water by enhancing the heat discharge performance of power semiconductor element.

Another aspect of the detailed description is to provide a new heat discharge structure that can reduce the size and weight of an inverter printed circuit board.

Still another aspect of the detailed description is to provide a new heat discharge structure that can secure safety in a water leakage condition.

The above aspect of the detailed description may be obtained by providing a water purifier in which a water-cooled type heat discharge structure substituting for conventional air-cooled type heat discharge structure by supplying purified water flowing in an inlet pipe to a hot water tank through a heat sink, and fixing the power semiconductor element to the heat sink.

The object is solved by the features of the independent claims. Preferred embodiments are given in the dependent claims.

According to one embodiment of the invention, the water purifier may include: a hot water tank; an inlet pipe connected to the hot water tank and configured to supply purified water to the hot water tank; a heater configured to heat the hot water tank; an inverter printed circuit board configured to control the operation of the heater; a heat sink formed of a metal material and disposed to partially enclose the inlet pipe; and a power semiconductor element electrically connected to the inverter printed circuit board to control power to the heater, and fixed to the heat sink to heat-exchange with purified water flowing in the inlet pipe.

Preferably, the heat sink may include a first heat discharge member having a first accommodation part that corresponds to one outer periphery of the inlet pipe; and a second heat discharge member having a second accommodation part that corresponds to another outer periphery of the inlet pipe, and wherein the first and second accommodation parts are disposed to completely enclose the outer periphery of the inlet pipe when the first and second heat discharge members are coupled to each other.

The inlet pipe includes a first extension part and a second extension part that are bent at least one time at one side of the heat sink so as to intersect the heat sink in opposite directions from each other.

Between the heat sink and the power semiconductor element, an insulator may be provided to prevent conduction between the heat sink and the power semiconductor element.

The insulator may be an alumina.

The water purifier may further include a bracket that is coupled to the heat sink to cover the power semiconductor element to fix the power semiconductor element to the heat sink in a pressurized state toward the heat sink.

The bracket may be formed of a synthetic resin material and coupled to the heat sink by a hook coupling or a screw coupling.

The power semiconductor element may include a bridge diamond and an Insulated Gate Bipolar Transistor (IGBT).

According to another embodiment related to the aspect, the water purifier may include: a hot water tank; a heater configured to heat the hot water tank; an inverter printed circuit board configured to control the operation of the heater; a heat sink including a first inner flow path and a second flow path that are formed of a metal single body and disposed in parallel with each other; an inlet pipe connected to the heat sink and the hot water tank and configured to supply purified water to the hot water tank via the heat sink; and a power semiconductor element electrically connected to the inverter printed circuit board to control power to the heater, and fixed to the heat sink to heat-exchange with purified water flowing in the first and second inner flow paths.

Preferably, the inlet pipe may include a first connection part connected to one end of the first inner flow path; a second connection part formed by being bent and configured to connect the other end of the first inner flow path and the other end of the second inner flow path; and a third connection part configured to connect one end of the second flow path to the hot water tank.

The first and second inner flow paths may be formed long by an extrusion molding of the heat sink along an extended direction of the heat sink.

The inlet pipe may be formed of a metal material of the same type as the heat sink and coupled to the heat sink by welding.

The water purifier may further include an insulator disposed between the heat sink and the power semiconductor element to prevent a conduction therebetween, and a bracket coupled to the heat sink to cover the power semiconductor element so as to fix the power semiconductor element to the heat sink in a pressurized state toward the heat sink.

According to still another embodiment related to the aspect, the water purifier may include: a hot water tank; a heater configured to heat the hot water tank; an inverter printed circuit board configured to control the operation of the heater; a heat sink formed of a metal material and including an inner flow path; an inlet pipe connected to each end of the inner flow path and the hot water tank and configured to supply purified water to the hot water tank via the heat sink; and a power semiconductor element electrically connected to the inverter printed circuit board to control power to the heater, and fixed to the heat sink to heat-exchange with purified water flowing in the inner flow path.

Preferably, the heat sink may include a first frame having both flat surfaces; and a second frame coupled to one surface of the first frame and having a flow path forming part outwardly protruded to form an inner flow path between one surface of the first frame.

The second frame may include an inlet and an outlet both communicating with the inner flow path, and the inlet pipe may be formed of a metal material of the same type as the first and second frames and may be coupled to the inlet and outlet by welding, respectively.

The power semiconductor element may be fixed to the other surface of the first frame.

The water purifier may further include: an insulator disposed between the heat sink and the power semiconductor element to prevent conduction between the heat sink and the power semiconductor element; and a bracket formed of a synthetic resin material, and coupled to the heat sink to cover the power semiconductor element so as to fix the power semiconductor element to the heat sink in a pressurized state toward the heat sink.

Further scope of applicability of the present disclosure will become more apparent from the detailed description given hereinafter. However, it should be understood that the detailed description and specific examples, while indicating preferred embodiments of the invention, are given by way of illustration only, since various changes and modifications within the scope of the invention as defined in the claims will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a conceptual view illustrating major elements for discharging hot water in the water purifier according to an embodiment of the present disclosure;
FIG.2 is a conceptual view of heat discharge structure for a power semiconductor element of FIG. 1 according to one embodiment of the present disclosure;
FIG.3 is an exploded view illustrating the components of FIG.2;
FIG.4 is a cross-sectional view taken along line "VI-VI" of FIG.2;
FIG.5 is a conceptual view illustrating a modified example of the heat discharge structure for a power semiconductor element of FIG.2;
FIG.6 is a conceptual view illustrating a second example of the heat discharge structure for a power semiconductor element of FIG.2;
FIG.7 is an exploded view illustrating the components of FIG.6;
FIG.8 is a conceptual view of heat discharge structure for a power semiconductor element of FIG. 1 according to third embodiment of the present disclosure;
FIG.9 is an exploded view illustrating the components of FIG.6; and
FIG. 10 is a cross-sectional view taken along line "X-X" of FIG.8.

### DETAILED DESCRIPTION OF THE INVENTION

Hereinafter, description will be given in more detail of a water purifier according to the present invention, with reference to the accompanying drawings.

For the sake of brief description with reference to the drawings, the same or equivalent components will be provided with the same reference numbers, and description thereof will not be repeated.

In addition, the structure applied to any one embodiment may be applied to another embodiment as long as the different embodiments are not structurally and functionally inconsistent.

A singular representation may include a plural representation unless it represents a definitely different meaning from the context.

In describing the present disclosure, if a detailed explanation for a related known function or construction is considered to unnecessarily divert the gist of the present disclosure, such explanation has been omitted but would be understood by those skilled in the art.

The accompanying drawings are used to help easily understand the technical idea of the present disclosure and it should be understood that the idea of the present disclosure is not limited by the accompanying drawings. The idea of the present disclosure should be construed to extend to any alterations, equivalents and substitutes besides the accompanying drawings.

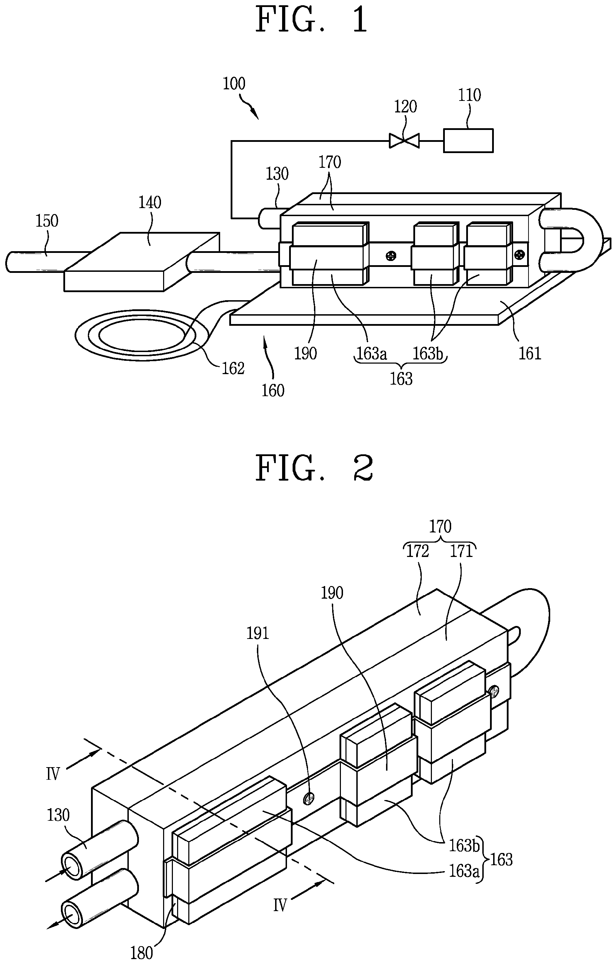

FIG. 1 is a conceptual view illustrating major elements for discharging hot water in the water purifier according to an embodiment of the present invention.

As shown in FIG.1, the water purifier 100 includes a filter unit 110, a flow control valve 120, an inlet pipe 130, a hot water tank 140, an outlet pipe 150, and a heating unit 160.

The filter unit 110 is configured to purify raw water provided from a water source. Water purified through the filter unit 110 is maintained in a drinkable state by users.

Purified water passing through the filter unit 110 is provided to the hot water tank 140, and then discharged to the outside after being heated at the hot water tank 140.

The flow rate of the purified water supplied to the hot water tank 140 from the filter unit 110 may be controlled by the flow control valve 120.

The inlet and outlet are formed in the hot water tank 140, respectively. The inlet and outlet may be placed on each side of the hot water tank 140. In the drawing, it is shown that the inlet and outlet are placed on the left side and the right side of the hot water tank 140, respectively. However, the present invention is not limited to this. The location of the inlet and outlet may be varied. For example, the inlet may be formed on the upper surface of the hot water tank 140 and the outlet may be formed on the lower surface of the hot water tank 140.

An inlet pipe 130 is connected to the inlet and an outlet pipe 150 is connected to the outlet. Purified water flowing through the filter unit 110 is supplied to the hot water tank 140 through the inlet pipe 130, and hot water discharged from the hot water tank 140 is discharged externally through the outlet pipe 150.

The hot water tank 140 may be formed of a conductive material. The hot water tank 140 may be formed into a rectangular body with a wide/long area and a low height.

A heating flow path (not shown) may be formed inside the hot water tank 140. It is configured such that water is heated by receiving heat from the heating unit 160 while flowing through the heating unit 160 without congestion. The heated flow path has a narrow and long width and is densely placed inside the water tank 140, which has been bent in multiple numbers.

The heating unit 160 is configured to heat the hot water tank 140 instantaneously.

In the drawing, for the heating unit 160, there is shown an induction heating system that heats the hot water tank 140 using the electromagnetic induction phenomenon.

Specifically, the heating unit 160 may include an inverter printed circuit board 161, a heater 162, and a power semiconductor element 163.

The inverter printed circuit board 161 functions as a control unit that controls the operation of the heater 162.

The heater 162 is connected electrically to the inverter printed circuit board 161 and is configured to heat the hot water tank 140 using electromagnetic induction phenomenon.

In the drawing, the heater 162 is shown to be composed of an induction coil. For reference, the present invention is not limited to this. The heater 162 may have various types such as a surface heater 162.

Induction coils are formed of a conductive material, such as copper, etc. When current is applied to the induction coil, magnetic field is formed inside and around the induction coil. In particular, when AC current is applied to the induction coil, the direction of magnetic field changes as much as the frequency of the AC current. The induction coil is connected electrically to the inverter printed circuit board 161.

The hot water tank 140 is configured to be located inside the AC magnetic field of the induction coil, and a voltage is induced to the hot water tank 140 according to the Faraday's law. Electronic flow occurs in the water tank 140 due to the induced voltage, and the induced current in the hot water tank 140 flows in the opposite direction of the current flowing through the induction coil. Therefore, the frequency of electric current flowing into the hot water tank 140 can be controlled by controlling the frequency of electric current flowing into the induction coil.

When an electric current flows in the hot water tank 140, resistance to obstruct the flow of electrons is generated, and heat is generated by this resistance.

The inverter printed circuit board 161 is configured to control the current applied to the induction coil.

The inverter printed circuit board 161 may control the induction heating rate by varying the frequency of the current applied to the induction coil. Therefore, by adjusting the induction heating rate, water of the user's desired temperature may be generated and consumed.

The power semiconductor element 163 is electrically connected to the inverter printed circuit board 161 to control the power supplied to the heater 162.

The power semiconductor element 163 is attached to a heat sink 170, which will hereinafter be described, for discharging heat. The power semiconductor element 163 includes bridge diodes 163a and an Insulated Gate Bipolar Transistor (IGBT) 163b.

The bridge diode 163a is connected to an AC power. The bridge diode 163a includes four diodes connected with each other and functions to rectify AC current to DC current.

The IGBT 163b is connected to the inverter printed circuit board 161 and functions as a switching device that turns on/off the power applied to the induction coil by being turned on/off by control of the inverter printed circuit board 161. The IGBT 163b may be provided in multiple number.

Heat may be generated in these power semiconductor element 163 due to a switching loss and a conduction loss.

The present invention is directed to a structure in that purified water flowing in an inlet pipe 130 is supplied to a hot water tank 140 via a heat sink 170, and a power semiconductor element 163 is fixed to an external surface of the heat sink 170 to heat-exchange with purified water flowing through the heat sink 170. Such a water-cooled type heat discharge system replaces the existing air-cooled type heat discharge system, and thus provides more efficient cooling system that cools the heat generated by the power semiconductor element 163.

Specifically, since the ordinary temperature water is continuously supplied through the inlet pipe 130 while hot water is discharged by nature of the direct water-type water purifier 100, the power semiconductor element 163 can be operated for a longer time within the operating temperature range. Therefore, the continuous water discharge capacity of the water purifier 100 can be improved.

In addition, since the purified water flowing in the inlet pipe 130 is preheated by the heat exchange with the power semiconductor element 163 before being supplied to the hot water tank 140, the heating time can be reduced for hot water generation, and the power of the heater 162 for heating can be reduced, obtaining the energy savings.

Further, the large and heavy heat discharge plate, which has been used in the existing air-cooled heat discharge system, can be replaced with a small-sized heat sink 170, reducing the size and weight of the inverter printed circuit board.

Hereinafter, a specific description will be given of the water-cooled type heat discharge structure using a heat sink 170.

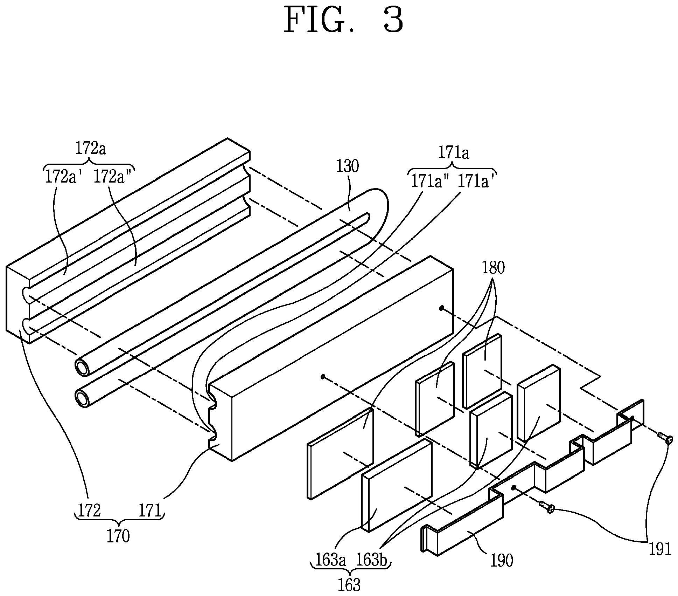

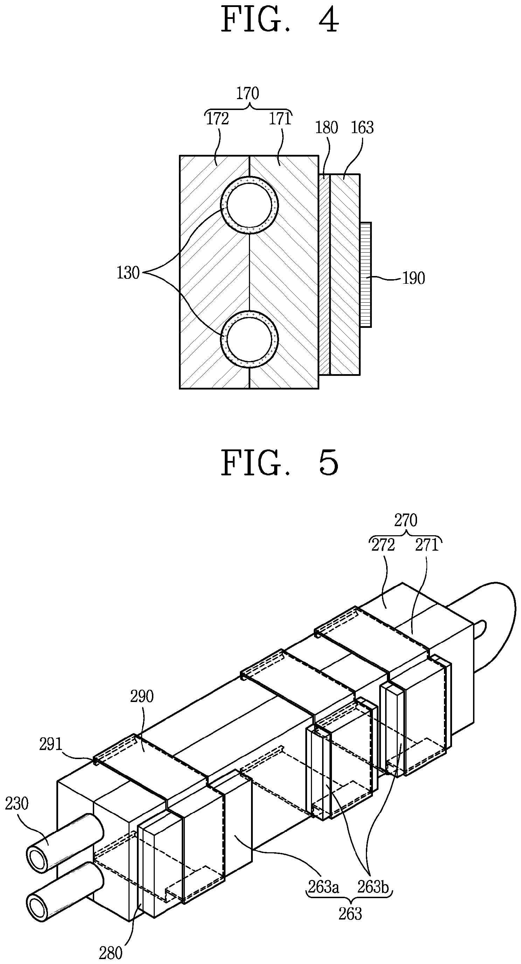

FIG.2 is a conceptual view of heat discharge structure for a power semiconductor element of FIG. 1 according to one embodiment of the present disclosure, FIG.3 is an exploded view illustrating the components of FIG.2, and FIG.4 is a cross-sectional view taken along line "VI-VI" of FIG.2.

Referring to FIGS. 2 through 4, the heat sink 170 is formed of a metal material and disposed to partially enclose the inlet pipe 130.

The heat sink 170 includes a first heat discharge member 171 and a second heat discharge member 172.

The first and second heat discharge members 171 and 172 are coupled to each other and configured to completely enclose part of the inlet pipe 130. That is, the first and second heat discharge members 171 and 172 are configured to come into surface contact with an external periphery corresponding to part of the inlet pipe 130.

The first heat discharge member 171 includes a first accommodation part 171a of the sunken type to correspond to one side outer periphery of the inlet pipe 130, and the second heat discharge member 172 includes a second accommodation part 171a of the sunken type to correspond to the other side outer periphery of the inlet pipe 130.

Here, one side outer periphery and another side outer periphery may be two parts of a half of the inlet pipe 130 when exactly dividing an outer periphery of the inlet pipe 130 into a half. Therefore, the first and second accommodation parts 171a and 172 have the same shape and size.

When coupling the first and second heat discharge members 171 and 172, the first accommodation part 171a and the second accommodation part 172a are arranged to completely enclose the outer periphery of the inlet pipe 130.

In order to improve the heat discharge performance, the structure to widen the area of the inlet pipe 130 which is surrounded by heat sink 170 may be considered. For this purpose, the inlet pipe 130 may include first extensions 171a' and 172a' and second extensions 171a" and 172a" which are at least bent once at one side of the heat sink 170 and is positioned opposite to each other to intersect in an opposite direction. The first extensions 171a' and 172a' and the second extensions 171a" and 172a" may be arranged in parallel. In the first extensions 171a and 172a' and the second extensions 171a" and 172a", the purified water flows in the opposite direction.

In the above configuration, the first accommodation parts 171a may be any half of the first and second extensions 171a' and 172a', and 171a" and 172a" when the outer peripheries thereof are exactly divided into two parts, respectively, and the second accommodation parts 172a may be any half of the first and second extensions 171a' and 172a', and 171a" and 172a" when the outer peripheries thereof are exactly divided into two parts, respectively.

In the above configuration, the heat sink 170 may be formed of the same material or heterogeneous material as the inlet pipe 130.

It is desirable that the inlet pipe 130 is formed of a stainless steel (SUS) material that inhibits corrosion and bacteria breeding in the sense that it forms a flow path for drinking water. The heat sink 170 may be formed of stainless steel material, but may be made of aluminum in consideration of weight and thermal conductivity.

Meanwhile, between the heat sink 170 and the power semiconductor element 163, an insulator 180 that prevents conduction between the heat sink 170 and the power semiconductor element 163 may be disposed.

Alumina (Al₂O₃) may be used as the insulator 180. Alumina electrically isolates the heat sink 170 and the power semiconductor element 163 from one another so that heat from the power semiconductor element 163 can be transferred to the heat sink 170 with high thermal conductivity.

As such, by disposing the insulator 180 between the heat sink 170 and the power semiconductor element 163 to prevent conduction therebetween, the electric-shock and fire hazards in the water-cooled type heat discharge system using the heat sink 170 can be eliminated.

In order to fix the power semiconductor element 163 to the heat sink 170 in a pressurized state toward the heat sink 170, a bracket 190 may be used.

The bracket 190 is coupled to the heat sink 170 so as to cover the power semiconductor element 163 so that the power semiconductor element 163 is fixed to the heat sink 170 in the pressurized conditions toward the heat sink 170.

The bracket 190 is preferably formed of synthetic resin materials to prevent conduction with the power semiconductor element 163.

The bracket 190 may be coupled to the heat sink 170 either by a screw coupling or by a hook coupling. In this embodiment, the fixing member 191 is shown to have been coupled to the heat sink 170 by a screw coupling through a fixing hole of the bracket 190.

FIG.5 is a conceptual diagram illustrating a modified embodiment of the heat discharge structure of the power semiconductor element 163 shown in FIG.2.

In FIG.5, the bracket 290 is shown to be hooked up to the heat sink 270. For this purpose, at least one trap hook 291 is provided in the bracket 290 and the trap hook 291 may be coupled to the heat sink 270 in a hook coupling manner. The heat sink 270 may include a hooking recess (not shown) where the trap hook 291 may be hooked, but it is not essential element.

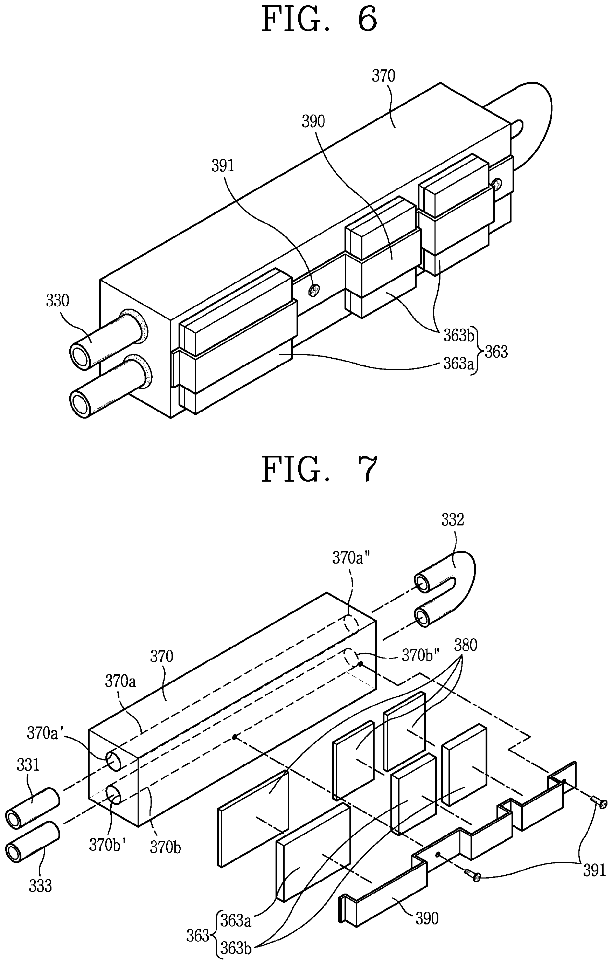

FIG.6 is a conceptual view illustrating a second example of the heat discharge structure for a power semiconductor element of FIG.2, and FIG.7 is an exploded view illustrating the components of FIG.6.

Referring to FIGS. 6 and 7, the heat sink 370 may be formed in a single body and include a first inner flow path 370a and a second inner flow path 370b disposed in parallel to each other. The first and second inner flow paths 370a and 370b are formed long along an extended direction of the heat sink 370 by an extrusion molding of the heat sink 370. That is, the first and second inner flow paths 370a and 370b are formed to be opened on both sides of the heat sink 370.

The heat sink 370 is equipped with the power semiconductor element 363, and is configured to heat exchange with purified water flowing in the first and second inner flow paths 370a and 370b.

The inlet pipe 330 is connected to the heat sink 370 and the hot water tank 340, and is configured to supply purified water to the hot water tank 340 through the heat sink 370. The inlet pipe 330 includes a first connection part 331, a second connection part 332, and a third connection part 333.

The first connection part 331 is connected to one end of the first inner flow path 370a. That is, the first connection part 331 is communicated with the opening 370a' of the first inner flow path 370a, which is opened at one side of the heat sink 370.

The second connection part 332 is formed in a bent shape and configured to connect another end of the first inner flow path 370a and another end of the second inner flow path 370b. That is, the second connection part 332 is formed in a U-shaped tube and is connected to the opening 370a' of the first inner flow path 370a and the opening 370b" of the second inner flow path 370b, respectively, which are opened on another side surface of the heat sink 370.

The third connection part 333 is connected to one end of the second inner flow path 370b. That is, the third connection part 333 is communicated with the opening of the second inner flow path 370b', which is opened on one side surface of the heat sink 370.

The coupling between the first through third connection parts 331, 332 and 333 and the first and second inner flow paths is made by welding. That is, the first through third connection parts 331, 332 and 333 are fixed to the heat sink 370 by welding.

Considering the possibility of corrosion appearing on the coupling by welding and heterogeneous welding, it is desirable that the inlet pipe 330 and the heat sink 370 are formed of the same kind of metal material. It is also desirable that the first through third connection parts 331, 332 and 333 and the first and second inner flow paths 370a and 370b are formed of stainless steel (SUS) material that is free from corrosion and germ-breeding in the sense that they form a flow path through which drinking water flows.

Meanwhile an insulator 380 is disposed between the heat sink 370 and the power semiconductor element 363 to prevent conduction therebetween.

Alumina (Al2O3), an aluminum oxide, may be used as the insulator 180. Alumina electrically isolates the heat sink 370 and the power semiconductor element 363 from one another so that heat from the power semiconductor element 363 can be transferred to the heat sink 370 with high thermal conductivity.

As such, by disposing the insulator 380 between the heat sink 370 and the power semiconductor element 363 to prevent conduction therebetween, the electric-shock and fire risk factors in the water-cooled type heat discharge system using the heat sink 370 can be eliminated.

In order to fix the power semiconductor element 363 to the heat sink 370 in a pressurized state toward the heat sink 370, a bracket 390 may be used.

The bracket 390 is coupled to the heat sink 370 so as to cover the power semiconductor element 363 so that the power semiconductor element 363 faces the heat sink 370 and is fixed in the pressurized conditions.

The bracket 390 is preferably formed of synthetic resin materials to prevent conduction with the power semiconductor element 363.

The bracket 390 may be coupled to the heat sink 370 either by a screw coupling or by a hook coupling. In this embodiment, the fixing member 391 is shown to have been coupled to the heat sink 370 by a screw coupling through a coupling hole of the bracket 390.

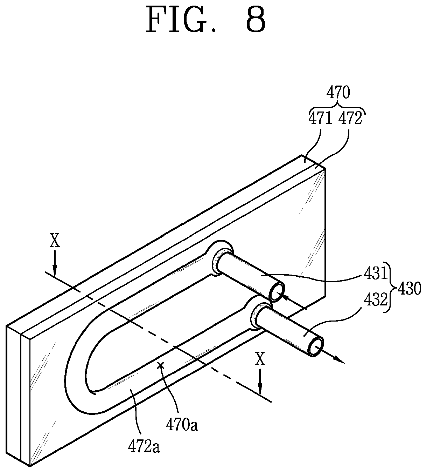

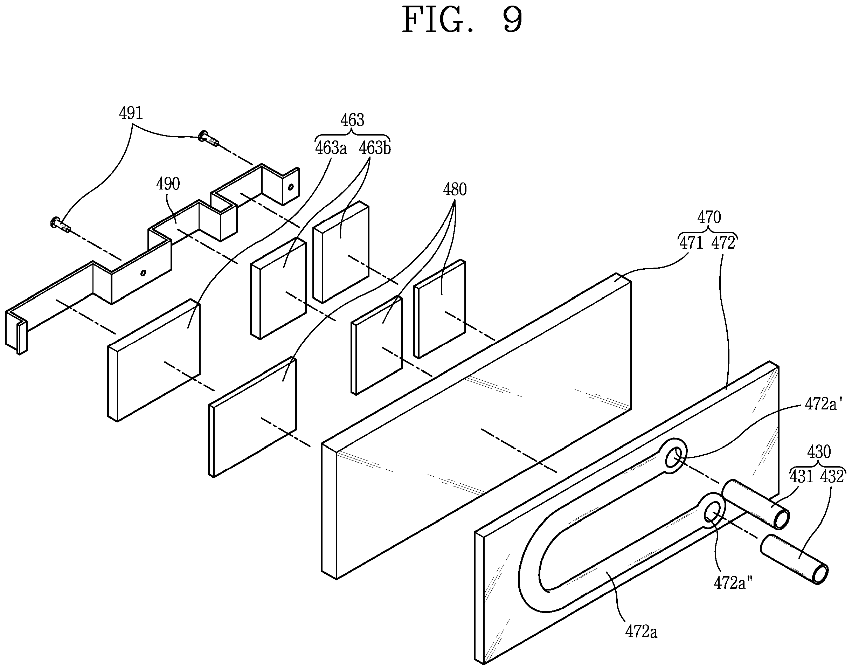

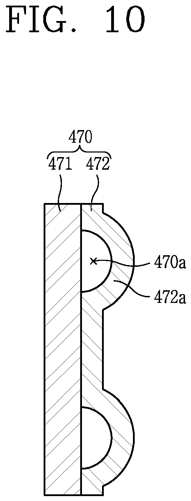

FIG.8 is a conceptual view of heat discharge structure for a power semiconductor element of FIG. 1 according to third embodiment of the present disclosure, FIG.9 is an exploded view illustrating the components of FIG.6, and FIG.10 is a cross-sectional view taken along line "X-X" of FIG.8.

Referring to FIG.8 through FIG.10, the heat sink 470 is formed of a metal material and includes an inner flow path 470a.

The heat sink 470 includes a first frame 471 and a second frame 472 which are coupled to each other, and the inner flow path 470a is defined by the first and second frames 471 and 472.

The first frame 471 is formed to have flat surfaces at both sides. The second frame 472 is coupled to one surface of the first frame 471, and includes a flow path forming portion 471a that forms an inner flow path 470a to protrude outwardly between one surface of the first frame 471. In the drawing, there is shown that the flow path forming portion 472a is formed in a U-shape.

The coupling of the first frame 471 and the second frame 472 may be made by welding.

For instance, the first frame 471 and the second frame 472 may be coupled to each other by spot-welding along an outer peripheral line of the flow path forming portion 472a. In this instance, on a back surface of the second frame 472, a spot-welding line corresponding to the outer peripheral line of the flow path forming portion 472a is formed.

The second frame 472 includes an inlet port 472a' and an outlet port 472a" that communicate with the inner flow path 470a.

The inlet port 472a' and the outlet port 472a" may be formed at both ends of the flow forming portion 472a, respectively. In this configuration, both ends of the inner flow path 470a include the inlet port 472a' and the outlet port 472a", respectively.

The inlet pipe 430 is connected to both ends of the inner flow path 470a, respectively. The inlet pipe 430 includes a first connection part 431 connected to the inlet port 472a' and a second connection part 432 connected to the outlet port 472a". The second connection part 432 is connected to the hot water tank 440 to supply purified water to the hot water tank 440.

The heat sink 470 is coupled to the power semiconductor element 463 so as to heat-exchange with purified water flowing in the inner flow path 470a. In the drawing, it is shown that the power semiconductor element 463 is fixed to other surface of the first frame 471 which is formed flat.

The coupling between the inlet port 471a' and the first connection part 431 and the coupling between the outlet port 472a" and the second connection part 432 are made by welding. That is, the first and second connection parts 431 and 432 and 333 are fixed to heat sink 470 (specifically, the second frame 472) by welding.

Considering the possibility of corrosion appearing on the coupling by welding and heterogeneous welding, it is desirable that the inlet pipe 430 (the first and second connection parts 431 and 432) and the heat sink 370 (the first and second frames 471 and 472) are formed of the same kind of metal material. It is also desirable that the inlet pipe 430 and the heat sink 470 are formed of stainless steel (SUS) material that is free from corrosion and germ-breeding in the sense that they form a flow path through which drinking water flows.

Meanwhile, an insulator 480 is disposed between the heat sink 470 and the power semiconductor element 463 to prevent conduction therebetween.

Alumina (Al2O3), an aluminum oxide, may be used as the insulator 480. Alumina electrically isolates the heat sink 470 and the power semiconductor element 463 from one another so that heat from the power semiconductor element 463 can be transferred to the heat sink 470 with high thermal conductivity.

As such, by disposing the insulator 480 between the heat sink 470 and the power semiconductor element 463 to prevent conduction therebetween, the electric-shock and fire risk factors in the water-cooled type heat discharge system using the heat sink 470 can be eliminated.

In order to fix the power semiconductor element 463 to the heat sink 470 in a pressurized state toward the heat sink 470, a bracket 490 may be used.

The bracket 490 is coupled to the heat sink 470 so as to cover the power semiconductor element 463 so that the power semiconductor element 463 faces the heat sink 470 and is fixed in the pressurized conditions.

The bracket 490 is preferably formed of synthetic resin materials to prevent conduction with the power semiconductor element 463.

The bracket 490 may be coupled to the heat sink 470 either by a screw coupling or by a hook coupling. In this embodiment, the fixing member 491 is shown to have been coupled to the heat sink 470 by a screw coupling through a coupling hole of the bracket 490.

Thus, according to an embodiment of the present disclosure, the following advantages can be obtained through the above described solutions.

Firstly, by fixing a power semiconductor element to a heat sink and supplying purified water flowing in an inlet pipe to a hot water tank through the heat sink, the existing air-cooled heat discharge system is replaced by a water-cooled heat discharge system so that heat generated from the power semiconductor element can be efficiently cooled.

Specifically, since the ordinary temperature water is continuously supplied through an inlet pipe while hot water is discharged, the power semiconductor element can be operated within the operating temperature range for longer periods of time due to the characteristics of the direct water type purifier. Therefore, the continuous water supply capacity of the water purifier can be improved.

In addition, purified water flowing in the inlet pipe is preheated by heat-exchanging with the power semiconductor element before the purified water flowing in the inlet pipe is supplied to the hot water tank, so the heating time can be reduced for hot water generation, and the power of the heater can be reduced, thereby reducing energy.

Secondly, a large and heavy heat discharge plate that was used in the existing air-cooled heat discharge system is replaced by a small-sized heat sink, resulting in reducing the size and weight of the inverter printed circuit board.

Thirdly, by disposing an insulator between the heat sink and the power semiconductor element to prevent conduction therebetween, the electric-shock and fire hazards in the water-cooled type heat discharge system using the heat sink can be removed.

## Claims

1. A water purifier, comprising:
a hot water tank (140, 340, 440);
an inlet pipe (130, 330, 430) connected to the hot water tank (140, 340, 440) and configured to supply purified water to the hot water tank (140, 340, 440);
a heater (162) configured to heat the hot water tank (140, 340, 440);
an inverter printed circuit board (161) configured to control the operation of the heater (162);
a heat sink (170, 270, 370, 470) formed of a metal material and disposed to partially enclose the inlet pipe (130, 330, 430); and
a power semiconductor element (163, 363, 463) electrically connected to the inverter printed circuit board (161) to control power to the heater (162), and fixed to the heat sink (170, 270, 370, 470) to heat-exchange with purified water flowing in the inlet pipe (130, 330, 430);
**characterized in that** the inlet pipe (130, 330, 430) includes a first extension part and a second extension part that are bent at least one time at one side of the heat sink (170, 270, 370, 470) to intersect the heat sink (170, 270, 370, 470) in opposite directions from each other, and
wherein the inlet pipe (130, 330, 430) is configured to supply purified water to the hot water tank (140) via the heat sink (170, 270, 370, 470), and the power semiconductor element is fixed to an external surface of the heat sink to heat-exchange with purified water flowing through the heat sink.

2. The water purifier of claim 1, wherein the heat sink (170, 270, 370, 470) includes:
a first heat discharge member (171) having a first accommodation part (171a) that corresponds to one outer periphery of the inlet pipe (130, 330, 430); and
a second heat discharge member (172) having a second accommodation part (172a) that corresponds to the other outer periphery of the inlet pipe (130, 330, 430), and
wherein the first and second accommodation parts (171a, 172a) are disposed to completely enclose the outer periphery of the inlet pipe (130, 330, 430) when the first and second heat discharge members (171, 172) are coupled to each other.

3. The water purifier of claim 1 or 2, wherein the heat sink (170, 270, 370, 470) is formed of a metal material and disposed to partially enclose the inlet pipe (130, 330, 430).

4. The water purifier of claim 1, 2 or 3, wherein the inlet pipe (130, 330, 430) is formed of a metal material of the same type as the heat sink (170, 270, 370, 470) and coupled to the heat sink (170, 270, 370, 470) by being welded.

5. The water purifier of claim 1, 2, 3 or 4, wherein an insulator (180, 380, 480) is disposed between the heat sink (170, 270, 370, 470) and the power semiconductor element (163, 363, 463) to prevent conduction between the heat sink (170, 270, 370, 470) and the power semiconductor element (163, 363, 463).

6. The water purifier of claim 5, wherein the insulator (180, 380, 480) is alumina.

7. The water purifier as claimed in any one of the preceding claims, further comprising a bracket (190, 290, 390, 490) coupled to the heat sink (170, 270, 370, 470) to cover the power semiconductor element (163, 363, 463) and configured to fix the power semiconductor element (163, 363, 463) to the heat sink (170, 270, 370, 470) in a pressurized state toward the heat sink (170, 270, 370, 470).

8. The water purifier of claim 7, wherein the bracket (190, 290, 390, 490) is formed of a synthetic resin material and coupled to the heat sink (170, 370, 470) by a hook coupling or a screw coupling.

9. The water purifier as claimed in any one of the preceding claims, wherein the power semiconductor element (163, 363, 463) includes a bridge diamond and an Insulated Gate Bipolar Transistor (IGBT).

10. The water purifier as claimed in any one of the preceding claims, wherein the a heat sink (170, 270, 370, 470) including a first inner flow path (370a) and a second flow path (370b) that are formed of a metal single body and disposed in parallel with each other.

11. The water purifier of claim 10, wherein the inlet pipe (130, 330, 430) includes:
a first connection part (331, 431) connected to one end of the first inner flow path (370a);
a second connection part (332, 432), formed by being bent, that connects the other end of the first inner flow path (370a) and the other end of the second inner flow path (370b); and
a third connection part (333) that connects one end of the second flow path (370b) to the hot water tank (140, 340, 440).

12. The water purifier of claim 10 or 11, wherein the first and second inner flow paths (370a) are formed long by an extrusion molding of the heat sink (170, 270, 370, 470) along an extended direction of the heat sink (170, 270, 370, 470).

13. The water purifier of claims 10, 11 or 12, wherein the inlet pipe (130, 330, 430) is connected to each end of the first and second inner flow path (270a, 370b).

14. The water purifier as claimed in any one of the preceding claims, wherein the heat sink (170, 270, 370, 470) includes:
a first frame (471) having both flat surfaces; and
a second frame (472) coupled to one surface of the first frame (471), and having a flow path forming part outwardly protruded to form an inner flow path between one surface of the first frame (471).

15. The water purifier of claim 14, wherein the second frame (472) includes an inlet and an outlet both communicating with the inner flow path, and
wherein the inlet pipe (130, 330, 430) is formed of a metal material of the same type as the first and second frames (471, 472) and coupled to the inlet and outlet by being welded, respectively and/or wherein the power semiconductor element (163, 363, 463) is fixed to the other surface of the first frame (471).

## Patentansprüche

1. Wasserreiniger, der Folgendes umfasst:
einen Heißwassertank (140, 340, 440);
ein Einlassrohr (130, 330, 430), das mit dem Heißwassertank (140, 340, 440) verbunden ist und konfiguriert ist, dem Heißwassertank (140, 340, 440) gereinigtes Wasser zuzuführen;
eine Heizvorrichtung (162), die konfiguriert ist, den Heißwassertank (140, 340, 440) zu erhitzen;
eine Wechselrichter-Leiterplatte (161), die konfiguriert ist, den Betrieb der Heizvorrichtung (162) zu steuern;
einen Kühlkörper (170, 270, 370, 470), der aus einem metallischen Material gebildet ist und dafür ausgelegt ist, das Einlassrohr (130, 330, 430) teilweise zu umschließen; und
ein Leistungshalbleiterelement (163, 363, 463), das mit der Wechselrichter-Leiterplatte (161) elektrisch verbunden ist, um die Leistung für die Heizvorrichtung (162) zu steuern, und an dem Kühlkörper (170, 270, 370, 470) befestigt ist, um einen Wärmeaustausch mit dem gereinigten Wasser, das in dem Einlassrohr (130, 330, 430) fließt, durchzuführen;
**dadurch gekennzeichnet, dass** das Einlassrohr (130, 330, 430) ein erstes Verlängerungsteil und ein zweites Verlängerungsteil enthält, die an einer Seite des Kühlkörpers (170, 270, 370, 470) mindestens einmal gebogen sind, um den Kühlkörper (170, 270, 370, 470) in entgegengesetzten Richtungen zu kreuzen,
wobei das Einlassrohr (130, 330, 430) konfiguriert ist, dem Heißwassertank (140) über den Kühlkörper (170, 270, 370, 470) gereinigtes Wasser zuzuführen, und das Leistungshalbleiterelement an einer äußeren Oberfläche des Kühlkörpers befestigt ist, um mit dem gereinigten Wasser, das durch den Kühlkörper fließt, einen Wärmetausch durchzuführen.

2. Wasserreiniger nach Anspruch 1, wobei der Kühlkörper (170, 270, 370, 470) Folgendes enthält:
ein erstes Wärmeabgabeelement (171), das ein erstes Aufnahmeteil (171a) aufweist, das einem Außenumfang des Einlassrohrs (130, 330, 430) entspricht; und
ein zweites Wärmeabgabeelement (172), das ein zweites Aufnahmeteil (172a) aufweist, das dem anderen Außenumfang des Einlassrohrs (130, 330, 430) entspricht,
wobei das erste und das zweite Aufnahmeteil (171a, 172a) dafür ausgelegt sind, den Außenumfang des Einlassrohrs (130, 330, 430) vollständig zu umschließen, wenn das erste und das zweite Aufnahmeteil (171a, 172a) aneinander gekoppelt sind.

3. Wasserreiniger nach Anspruch 1 oder 2, wobei der Kühlkörper (170, 270, 370, 470) aus einem metallischen Material gebildet ist und dafür ausgelegt ist, das Einlassrohr (130, 330, 430) teilweise zu umschließen.

4. Wasserreiniger nach Anspruch 1, 2 oder 3, wobei das Einlassrohr (130, 330, 430) aus einem metallischen Material desselben Typs wie der Kühlkörper (170, 270, 370, 470) gebildet ist und durch Schweißen an den Kühlkörper (170, 270, 370, 470) gekoppelt ist.

5. Wasserreiniger nach Anspruch 1, 2, 3 oder 4, wobei ein Isolator (180, 380, 480) zwischen dem Kühlkörper (170, 270, 370, 470) und dem Leistungshalbleiterelement (163, 363, 463) angeordnet ist, um eine Leitung zwischen dem Kühlkörper (170, 270, 370, 470) und dem Leistungshalbleiterelement (163, 363, 463) zu verhindern.

6. Wasserreiniger nach Anspruch 5, wobei der Isolator (180, 380, 480) Aluminium ist.

7. Wasserreiniger nach einem der vorhergehenden Ansprüche, der ferner eine Halteklammer (190, 290, 390, 490) umfasst, die an den Kühlkörper (170, 270, 370, 470) gekoppelt ist, um das Leistungshalbleiterelement (163, 363, 463) zu bedecken, und konfiguriert ist, das Leistungshalbleiterelement (163, 363, 463) in einem druckbeaufschlagten Zustand in Richtung des Kühlkörpers (170, 270, 370, 470) an dem Kühlkörper (170, 270, 370, 470) zu befestigen.

8. Wasserreiniger nach Anspruch 7, wobei die Halteklammer (190, 290, 390, 490) aus einem synthetischen Harzmaterial gebildet ist und durch eine Hakenkupplung oder eine Schraubenkupplung an den Kühlkörper (170, 270, 370, 470) gekoppelt ist.

9. Wasserreiniger nach einem der vorhergehenden Ansprüche, wobei das Leistungshalbleiterelement (163, 363, 463) einen Brückendiamanten und einen Bipolartransistor mit isolierter Gate-Elektrode (IGBT) enthält.

10. Wasserreiniger nach einem der vorhergehenden Ansprüche, wobei der Kühlkörper (170, 270, 370, 470), der einen ersten inneren Fließweg (370a) und einen zweiten Fließweg (370b) enthält, die aus einem metallischen Einzelkörper gebildet sind und parallel zueinander angeordnet sind.

11. Wasserreiniger nach Anspruch 10, wobei das Einlassrohr (130, 330, 430) Folgendes enthält:
ein erstes Verbindungsteil (331, 431), das mit einem Ende des ersten inneren Fließwegs (370a) verbunden ist;
ein zweites Verbindungsteil (332, 432), das durch Biegen geformt ist, das das andere Ende des ersten inneren Fließwegs (370a) und das andere Ende des zweiten inneren Fließwegs (370b) verbindet; und
ein drittes Verbindungsteil (333), das ein Ende des zweiten Fließwegs (370b) mit dem Heißwassertank (140, 340, 440) verbindet.

12. Wasserreiniger nach Anspruch 10 oder 11, wobei der erste und der zweite innere Fließweg (370a) durch Strangpressen des Kühlkörpers (170, 270, 370, 470) entlang einer Erstreckungsrichtung des Kühlkörpers (170, 270, 370, 470) gebildet sind.

13. Wasserreiniger nach Anspruch 10, 11 oder 12, wobei das Einlassrohr (130, 330, 430) mit jedem Ende des ersten und zweiten inneren Fließwegs (270a, 370b) verbunden ist.

14. Wasserreiniger nach einem der vorhergehenden Ansprüche, wobei der Kühlkörper (170, 270, 370, 470) Folgendes enthält:
einen ersten Rahmen (471), der beide flachen Oberflächen aufweist; und
einen zweiten Rahmen (472), der an eine Oberfläche des ersten Rahmens (471) gekoppelt ist und einen einen Fließweg bildenden Teil aufweist, der nach außen vorsteht, um zwischen einer Oberfläche des ersten Rahmens (471) einen inneren Fließweg zu bilden.

15. Wasserreiniger nach Anspruch 14, wobei der zweite Rahmen (472) einen Einlass und einen Auslass aufweist, die beide mit dem inneren Fließweg kommunizieren, und
wobei das Einlassrohr (130, 330, 430) aus einem metallischen Material desselben Typs wie der erste und der zweite Rahmen (471, 472) gebildet ist bzw. durch Schweißen an den Einlass und den Auslass gekoppelt ist und/oder wobei das Leistungshalbleiterelement (163, 363, 463) an die andere Oberfläche des ersten Rahmens (471) gekoppelt ist.

## Revendications

1. Purificateur d'eau, comportant
un réservoir d'eau chaude (140, 340, 440) ;
un tuyau d'entrée (130, 330, 430) raccordé au réservoir d'eau chaude (140, 340, 440) et configuré pour fournir de l'eau purifiée au réservoir d'eau chaude (140, 340, 440) ;
un élément chauffant (162) configuré pour chauffer le réservoir d'eau chaude (140, 340, 440) ;
une carte à circuit imprimé d'onduleur (161) configurée pour commander le fonctionnement de l'élément chauffant (162) ;
un dissipateur thermique (170, 270, 370, 470) formé d'un matériau métallique et disposé de manière à entourer partiellement le tuyau d'entrée (130, 330, 430) ; et
un élément à semi-conducteur de puissance (163, 363, 463) électriquement connecté à la carte à circuit imprimé d'onduleur (161) pour commander la puissance fournie à l'élément chauffant (162), et fixé sur le dissipateur thermique (170, 270, 370, 470) pour échanger de la chaleur avec l'eau purifiée s'écoulant dans le tuyau d'entrée (130, 330, 430) ;
**caractérisé en ce que** le tuyau d'entrée (130, 330, 430) inclut une première partie d'extension et une seconde partie d'extension qui sont coudées au moins une fois sur un côté du dissipateur thermique (170, 270, 370, 470) pour croiser le dissipateur thermique (170, 270, 370, 470) dans des directions opposées l'une à l'autre, et
dans lequel le tuyau d'entrée (130, 330, 430) est configuré pour fournir l'eau purifiée au réservoir d'eau chaude (140) via le dissipateur thermique (170, 270, 370, 470), et l'élément à semi-conducteur de puissance est fixé sur une surface externe du dissipateur thermique pour échanger de la chaleur avec l'eau purifiée s'écoulant à travers le dissipateur thermique.

2. Purificateur d'eau selon la revendication 1, dans lequel le dissipateur thermique (170, 270, 370, 470) inclut :
un premier élément d'évacuation de chaleur (171) ayant une première partie de réception (171a) qui correspond à une périphérie extérieure du tuyau d'entrée (130, 330, 430) ; et
un second élément d'évacuation de chaleur (172) ayant une seconde partie de réception (172a) qui correspond à l'autre périphérie extérieure du tuyau d'entrée (130, 330, 430), et
dans lequel les première et seconde parties de réception (171a, 172a) sont disposées de manière à entourer entièrement la périphérie extérieure du tuyau d'entrée (130, 330, 430) lorsque les premier et second éléments d'évacuation de chaleur (171, 172) sont couplés l'un à l'autre,

3. Purificateur d'eau selon la revendication 1 ou 2, dans lequel le dissipateur thermique (170, 270, 370, 470) est formé d'un matériau métallique et disposé de manière à entourer partiellement le tuyau d'entrée (170, 270, 370, 470).

4. Purificateur d'eau selon la revendication 1, 2 ou 3, dans lequel le tuyau d'entrée (130, 330, 430) est formé d'un matériau métallique du même type que le dissipateur thermique (170, 270, 370, 470) et couplé au dissipateur thermique (170, 270, 370, 470) en étant soudé.

5. Purificateur d'eau selon la revendication 1, 2, 3 ou 4, dans lequel un isolant (180, 380, 480) est disposé entre le dissipateur thermique (170, 270, 370, 470) et l'élément à semi-conducteur de puissance (163, 363, 463) pour empêcher une conduction entre le dissipateur thermique (170, 270, 370, 470) et l'élément à semi-conducteur de puissance (163, 363, 463).

6. Purificateur d'eau selon la revendication 5, dans lequel l'isolant (180, 380, 480) est de l'alumine.

7. Purificateur d'eau selon l'une quelconque des revendications précédentes, comportant en outre une patte de fixation (190, 290, 390, 490) couplée au dissipateur thermique (170, 270, 370, 470) pour recouvrir l'élément à semi-conducteur de puissance (163, 363, 463) et configurée pour fixer l'élément à semi-conducteur de puissance (163, 363, 463) sur le dissipateur thermique (170, 270, 370, 470) dans un état mis sous pression vers le dissipateur thermique (170, 270, 370, 470).

8. Purificateur d'eau selon la revendication 7, dans lequel la patte de fixation (190, 290, 390, 490) est formée d'un matériau en résine synthétique et couplée au dissipateur thermique (170, 370, 470) par un couplage par crochet ou un couplage à vis.

9. Purificateur d'eau selon l'une quelconque des revendications précédentes, dans lequel l'élément à semi-conducteur de puissance (163, 363, 463) inclut un diamant en pont et un transistor bipolaire à grille isolée (IGBT).

10. Purificateur d'eau selon l'une quelconque des revendications précédentes, dans lequel le dissipateur thermique (163, 363, 463) inclut un premier trajet d'écoulement interne (370a) et un second trajet d'écoulement (370b) qui sont formés d'un seul corps métallique et disposés parallèlement l'un à l'autre.

11. Purificateur d'eau selon la revendication 10, dans lequel le tuyau d'entrée (130, 330, 430) inclut :
une première partie de liaison (331, 431) reliée à une extrémité du premier trajet d'écoulement interne (370a) ;
une deuxième partie de liaison (332, 342), formée en étant coudée, qui relie l'autre extrémité du premier trajet d'écoulement interne (370a) et l'autre extrémité du second trajet d'écoulement interne (370b) ; et
une troisième partie de liaison (333) qui relie une extrémité du second trajet d'écoulement (370b) au réservoir d'eau chaude (140, 340, 440).

12. Purificateur d'eau selon la revendication 10 ou 11, dans lequel les premier et second trajets d'écoulement internes (370a) sont formés longs par un moulage par extrusion du dissipateur thermique (170, 270, 370, 470) le long d'une direction d'extension du dissipateur thermique (170, 270, 370, 470).

13. Purificateur d'eau selon les revendications 10, 11 ou 12, dans lequel le tuyau d'entrée (130, 330, 430) est relié à chaque extrémité des premier et second trajets d'écoulement internes (270a, 370b).

14. Purificateur d'eau selon l'une quelconque des revendications précédentes, dans lequel le dissipateur thermique (170, 270, 370, 470) inclut :
un premier châssis (471) ayant les deux surfaces planes ; et
un second châssis (472) couplé à une surface du premier châssis (471), et ayant un trajet d'écoulement formant une partie faisant saillie vers l'extérieur pour former un trajet d'écoulement interne entre une surface du premier châssis (471).

15. Purificateur d'eau selon la revendication 14, dans lequel le second châssis (472) inclut une entrée et une sortie communiquant toutes deux avec le trajet d'écoulement interne, et
dans lequel le tuyau d'entrée (130, 330, 430) est formé d'un matériau métallique du même type que les premier et second châssis (471, 472) couplés à l'entrée et à la sortie en étant soudés, respectivement et/ou dans lequel l'élément à semi-conducteur de puissance (163, 363, 463) est fixé sur l'autre surface du premier châssis (471).
